# EUROPEAN PATENT APPLICATION

(11) **EP 3 731 572 A1**
(43) Date of publication of application: **28.10.2020**
(21) Application number: 18890941.0
(22) Date of filing: 21.12.2018
(51) Int. Cl.: H04W 52/02

(54) **MOBILE TERMINAL AND ANTENNA SWITCHING METHOD**

(30) Priority: 22.12.2017 CN 201711408726
(71) Applicant: ZTE Corporation, Shenzhen, Guangdong 518057 (CN)
(72) Inventor: LIU, Kai, Shenzhen, Guangdong 518057 (CN); CHEN, Jianqiang, Shenzhen, Guangdong 518057 (CN)
(74) Representative: Baudler, Ron
(86) International application number: PCT/CN2018/122548
(87) International publication number: WO 2019/120273

(57) **Abstract**

The present disclosure provides a mobile terminal and an antenna switching method. The mobile terminal is provided with a main antenna and at least one branch antenna therein. The main antenna can transmit data in a plurality of frequency bands, and the branch antenna can transmit data in a single frequency band. The mobile terminal also comprises a processor configured to switch a communication service between the main antenna and the branch antenna.

## Description

### TECHNICAL FIELD

The present disclosure relates to, but is not limited to, the field of communications.

### BACKGROUND

In the related art, mobile phones have higher and higher integration level and are provided with more and more powerful functions. In the past, the mobile phones only had the functions of calling and texting. Nowadays, the mobile phones have developed to have functions of data service, Global Positioning System (GPS) or Wireless Fidelity (WIFI), picture taking and so on. However, the more the functions are, the greater the power consumption of the mobile phones is affected. At present, lithium ion rechargeable batteries are commonly used, with the currents varying from 1000mA to 5000mA. If the functions are continuously increased without considering the power consumption, the effective use time of the mobile phones will become shorter. Consumers will be annoyed by low battery of their mobile phones, and frequent charging will shorten the battery life, resulting in a reduction of the service life of the mobile phones.

At present, every mobile phone is designed to have a single antenna, which is applicable to all transmitting and receiving frequency bands and has no branch structure, and the transmission efficiency of the mobile phone is about 30%. In an area with weak signals, almost every mobile phone needs to transmit with the maximum transmitting power, which greatly increases the power consumption of the mobile phone. The component that consumes power most in a mobile phone is a power amplifier, therefore, if the current of the power amplifier can be effectively optimized, the battery life of the mobile phone may be extended, and the service life of the mobile phone may be prolonged.

### SUMMARY

The embodiments of the present disclosure provide a mobile terminal and a method for switching antennas, so as to at least solve the problem of large power consumption of a mobile phone due to low efficiency of an antenna in the related art.

According to an embodiment of the present disclosure, a mobile terminal is provided, and includes a main antenna and at least one branch antenna, which are configured to transmit data between the mobile terminal and a mobile communication network; and a processor configured to switch a communication service between the main antenna and the branch antenna.

According to another embodiment of the present disclosure, a method for switching antennas is provided, and includes: detecting status information of a mobile terminal when the mobile terminal performs a communication service; and switching the communication service from a main antenna of the mobile terminal to a branch antenna of the mobile terminal in response to that the status information of the mobile terminal meets preset conditions.

According to another embodiment of the present disclosure, a storage medium is provided and has a computer program stored therein. When the computer program is executed by a processor, the processor performs the method for switching antennas according to the present disclosure.

According to another embodiment of the present disclosure, a processor for executing a computer program is provided. When the computer program is executed by the processor, the processor performs the method for switching antennas according to the present disclosure.

### BRIEF DESCRIPTION OF THE DRAWINGS

The drawings described here are intended to provide a further understanding of the present disclosure and constitutes a part of the present application. The exemplary embodiments of the present disclosure and the description thereof are intended to explain the present disclosure, but do not constitute improper limitation to the present disclosure. In the drawings:
Fig. 1 is a block diagram of a hardware structure of a mobile terminal according to an embodiment of the present disclosure;
Fig. 2 is a diagram illustrating implementation of reducing transmitting power consumption by a branch antenna according to a specific embodiment of the present disclosure;
Fig. 3 is a three-dimensional model diagram of a branch antenna frame according to a specific embodiment of the present disclosure;
Fig. 4 is a schematic diagram of an overall three-dimensional structure of a mobile phone on which frequency division of antennas is implemented according to a specific embodiment of the present disclosure;
Fig. 5 is a two-dimensional model diagram of a mobile phone on which branch antennas are provided according to a specific embodiment of the present disclosure; and
Fig. 6 is a flowchart illustrating a method for switching antennas according to an embodiment of the present disclosure.

### DETAILED DESCRIPTION

The technical solutions of the present application may be applied to mobile terminals, such as a mobile phone and a tablet, but not limited thereto.

As for such single antenna in the current design of mobile phones, the receiving sensitivity is lower than the conduction sensitivity by about 5dB, and the single antenna structure cannot improve the receiving sensitivity.

In the related art, a single antenna is provided for transmission and reception in most cases. For such single antenna, strong signals are required for transmitting signals in an environment where signals are weak. In such case, the power of the mobile phone is continuously consumed at the maximum current when a user is on the phone, and the battery runs low quickly. Sometimes, the efficiency of the antenna is too low to enable the mobile phone to make/receive a call, which affects user experience.

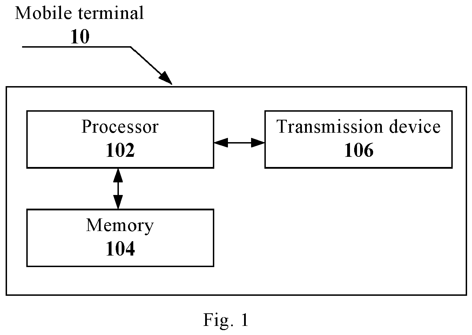

According to an embodiment of the present disclosure, a mobile terminal is provided. Fig. 1 is a block diagram of a hardware structure of a mobile terminal according to an embodiment of the present disclosure.

As shown in Fig. 1, a mobile terminal 10 may include one or more processors 102 (only one processor is shown), a memory 104 for storing data, and a transmission device 106 for communication functions. The processor 102 may include, but is not limited to, processing device such as microprocessors (e.g., microcontroller unit (MCU)) or programmable logic devices (e.g., field programmable gate array (FPGA)). It should be understood by those skilled in the art that the structure shown in Fig. 1 is only for illustration and is not intended to limit the structure of the above mobile terminal. For example, the mobile terminal 10 may include more or fewer components than those shown in Fig. 1, or may be configured in a way different from that shown in Fig. 1.

The memory 104 may be configured to store software programs and modules of application software (such as the program instructions/modules corresponding to a method for switching antennas in an embodiment of the present disclosure). By executing the software programs and modules stored in the memory 104, the processor 102 performs various functional applications and data processing, that is, implementing the method for switching antennas according to an embodiment of the present disclosure. The memory 104 may include a high-speed random access memory, and may also include a non-volatile memory, such as one or more magnetic storage devices, flash memories, or other non-volatile solid-state memories. In some examples, the memory 104 may further include a memory remotely arranged relative to the processor 102, and the remote memory may be connected to the mobile terminal 10 via a network. The examples of the above network include, but are not limited to, the Internet, an intranet, a local area network, a mobile communication network, and the combinations thereof.

The transmission device 106 is configured to receive or transmit data via a network. The examples of the network may include a wireless network provided by a communication provider of the mobile terminal 10. In an example, the transmission device 106 includes a Network Interface Controller (NIC) that may be connected to other network devices via a base station so as to communicate with the Internet. In another example, the transmission device 106 may be a Radio Frequency (RF) module that is configured to communicate with the Internet in a wireless manner.

The mobile terminal 10 may further include a main antenna and at least one branch antenna, which are configured to transmit data between the mobile terminal 10 and a mobile communication network. The processor 102 is configured to switch a communication service between the main antenna and the branch antenna. The main antenna and the branch antenna in the embodiment may be incorporated in the hardware components of the transmission device 106.

According to the above technical solution, the mobile terminal is provided with the main antenna capable of transmitting data in a plurality of frequency bands, and the branch antenna capable of transmitting data in a specific frequency band, and the branch antenna is better than the main antenna in terms of transmission effect in the specific frequency band. According to the above technical solution, the mobile terminal may select an antenna from the plurality of antennas (i.e., the main antenna and the branch antenna) in different scenarios, so as to achieve a balance between the transmission effect and power consumption of the terminal, and solve the problem of large power consumption of the mobile phone due to low efficiency of the antenna in the related art.

Optionally, the main antenna is configured to transmit data in a plurality of frequency bands, and the branch antenna is configured to transmit data in a single frequency band.

Optionally, the branch antenna includes a plurality of branch antennas corresponding to a plurality of frequency bands, respectively. Each of the branch antennas may correspond to a specific frequency band. Compared with the case of using the main antenna, the mobile terminal produces a better transmission effect in the case of using a specific branch antenna to transmit data in a specific frequency band, and also the power consumption of the mobile terminal or the electricity consumed by the mobile terminal is less.

Optionally, the processor 102 is further configured to switch a communication service to the branch antenna in response to that the transmitting power of the communication service is greater than a first preset value.

Optionally, the processor 102 is further configured to switch a communication service to the branch antenna in response to that the receiving sensitivity of the communication service is less than a second preset value. The communication service is switched to the at least one branch antenna in response to that the receiving sensitivity of the communication service is less than the second preset value.

Optionally, in the case where the plurality of branch antennas are included, the processor 102 is further configured to determine an operating frequency band in which the main antenna performs the communication service, and switch the communication service from the main antenna to a branch antenna corresponding to the determined operating frequency band.

Detailed description is given below with reference to an embodiment of the present disclosure.

According to an embodiment of the present disclosure, the transmitting efficiency of a mobile phone is increased by switching between antennas of the mobile phone, so as to reduce the transmitting power, thereby reducing the power consumption of the mobile phone.

According to an embodiment of the present disclosure, firstly, an antenna is calibrated to be applicable to all frequency bands to serve as a main antenna, with the transmitting efficiency being about 30%; and then a branch antenna structure and a matching circuit are added to make the transmitting efficiency of the mobile phone in each frequency band reach 50% to 60%. If the actual output power required for a user to make a call or perform data services in a remote area or an area with weak signals is 18dBm, the transmitting power of the mobile phone should be 23dBm. By switching the antenna of the mobile phone to a specific frequency band, the efficiency may be increased, so that the transmitting power of the mobile phone is required to be only 20dBm for realizing an output power of 18dBm. With the transmitting power of the mobile phone being reduced by 3dBm, the current may be reduced by about 120mA. In terms of reception, the actual receiving power is about -103; by switching the antenna, the receiving efficiency is improved, so that the receiving power may be increased to about -105, thereby improving the communication capability of the mobile phone.

By adding the branch antenna and the branch matching structure corresponding to each frequency band on the basis of the single main antenna, the transmitting and receiving efficiencies are maximized when a single frequency band is used in a specific environment, so as to save current, reduce power consumption of mobile phone, extend battery life of mobile phone and improve communication capability of mobile phone. Such solution requires that antenna pins and switches for properly switching in different scenarios should be added to the mobile phone.

It should to be noted that the following specific numerical values are for illustration, and are not limited thereto.

Step One: under the condition of normal use (standby mode) of a mobile phone by a user, a main antenna structure is used as an antenna, without switching the antenna.

Step Two: in the case where the user is in a remote area far away from a base station or in a tunnel where the signals are relatively weak, when the transmitting power (conduction) is increased to 23dBm during a call, the antenna is switched to a branch antenna structure corresponding to the currently used frequency band because it is determined by a system that the antenna needs to be switched to increase efficiency once the transmitting power of the signals exceeds 18dBm, so that the efficiency is increased by 2.5dBm, that is, reducing the transmitting power to 20.5dBm, which reduces the power consumption, extends the talk time, improve the receiving sensitivity and enhances the communication.

Step Three: after the call is finished, the mobile phone may properly identify the signal intensity at the moment, and the system may keep switching the antenna to the branch antenna if the signal intensity is less than about -100dBm.

Step Four: when the signal intensity of the mobile phone is greater than -100dBm, the system switches the antenna to the main antenna so as to return to the original standby mode.

The embodiment provides a structure capable of automatically switching between the main antenna and the branch antenna according to the signal receiving or transmitting power of the mobile phone, so that the transmitting power of the mobile phone is optimized, the power consumption is reduced, and the receiving sensitivity is enhanced.

The embodiments of the present disclosure are described in detail below with reference to the drawings.

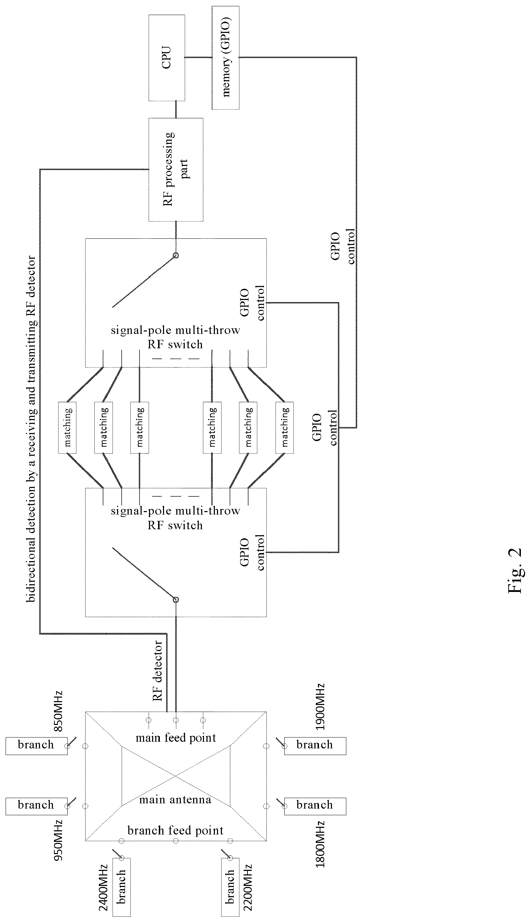

Fig. 2 is a diagram illustrating implementation of reducing transmitting power consumption by a branch antenna according to a specific embodiment of the present disclosure.

As shown in Fig. 2, when a user gradually enters an area where the signals from a base station are weak during a call, the transmitting power of the mobile phone is gradually increased, which leads to a continuous increase of the power consumption. Once the power is increased to 18dBm, a transmitting detection circuit of the mobile phone sends a signal to the processor, and the processor performs branch antenna switching via a general-purpose input/output (GPIO) port to switch to a currently used frequency band. After the mobile phone is switched to the branch antenna, the efficiency is increased, so that the transmitting power, which is originally required to be 23dBm, may be reduced to 20.5dBm after the switching, which reduces the power consumption.

After the call is finished, the system detects environmental signals, a receiving detection signal is transmitted to the processor through a radio frequency transceiver chip when the power of the frequency band of the environmental signals is less than -100dBm, and the processor switches the antenna from the main antenna to the branch antenna via the GPIO port for enhancing the receiving sensitivity of the signals. If the power of the frequency band of the environmental signals is greater than -100dBm, the antenna is not switched, and is kept at the position of the main antenna.

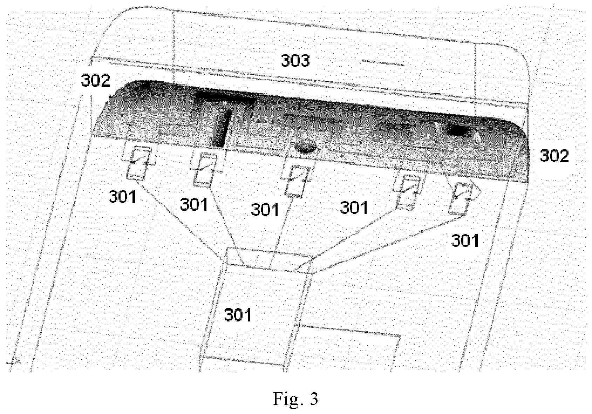

Fig. 3 is a three-dimensional model diagram of a branch antenna frame according to a specific embodiment of the present disclosure. In Fig. 3, a plurality of switches 301, branch antennas 302 on two sides and a main antenna 303 are shown.

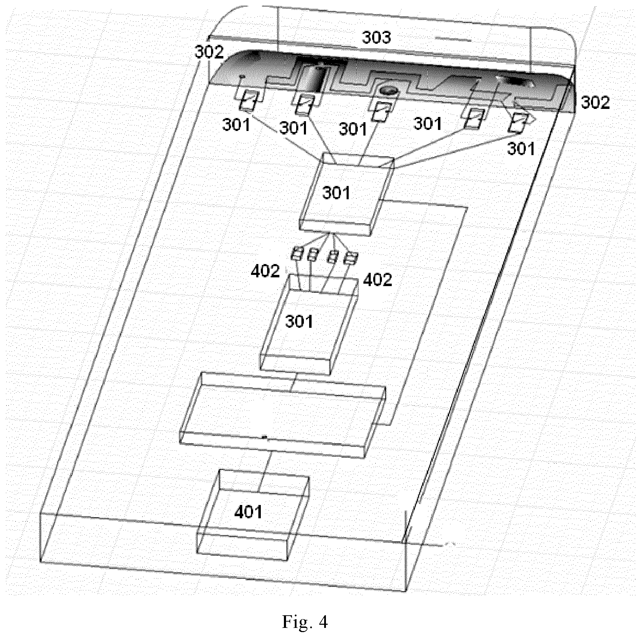

Fig. 4 is a schematic diagram of an overall three-dimensional structure of a mobile phone on which frequency division of antennas is implemented according to a specific embodiment of the present disclosure. In Fig. 4, a plurality of switches 301, branch antennas 302 on two sides, a main antenna 303, a central processing unit (CPU) 401, and branch matching and processing units 402 are shown.

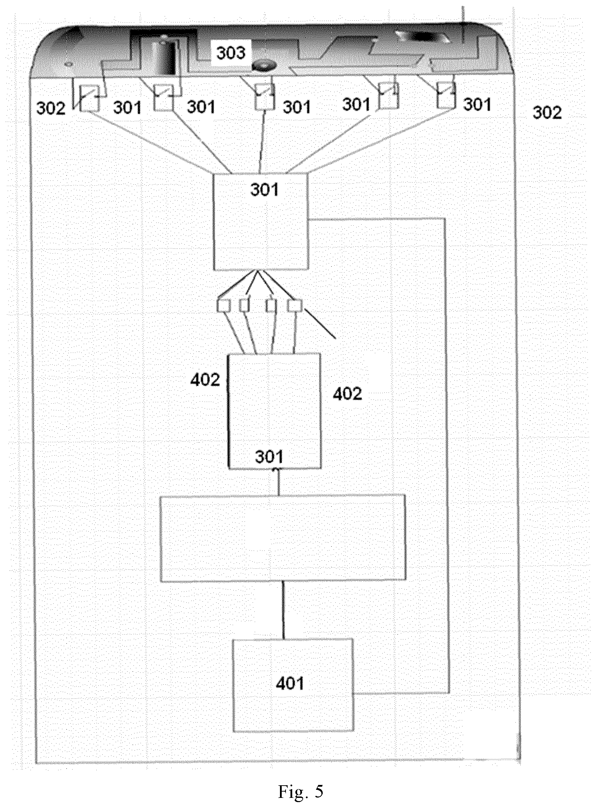

Fig. 5 is a two-dimensional model diagram of a mobile phone on which branch antennas are provided according to a specific embodiment of the present disclosure. In Fig. 5, a plurality of switches 301, branch antennas 302 on two sides, a main antenna 303, a central processing unit (CPU) 401, and branch matching and processing units 402 are shown.

By adopting the above solutions, when a mobile phone is in normal use (in a standby mode), the power amplifier of the mobile phone may be turned off, and the single main antenna is used as the antenna; when the mobile phone is used in a tunnel or a remote place (far away from a base station) and the signal intensity detected by the mobile phone is less than -100dBm, antenna switching is immediately performed to switch the mobile phone to a branch antenna corresponding to the frequency band being used, so as to enhance the receiving sensitivity of the mobile phone. The mobile phone works with the main antenna when making a call in an environment with strong signals, but once the mobile phone is used in a tunnel (for example, driving through a tunnel), the signals of the mobile phone weaken immediately, and the transmitting power is immediately increased, so that the power consumption is increased. In such case, when the mobile phone detects that the transmitting power exceeds 18dBm, antenna switching is performed to switch the antenna to a branch antenna corresponding to the frequency band being used, so as to increase the efficiency, reduce the transmitting power from the original 23dBm to about 20.5dBm, increase the receiving sensitivity by about 2.5dBm, reduce the power consumption and extend the talk time.

In addition, as an alternative to the above technical solutions, a separate branch antenna may be used in each frequency band, and no main antenna covering a plurality of frequency bands is provided, so that the mobile phone may always achieve the highest transmitting efficiency and the strongest receiving sensitivity.

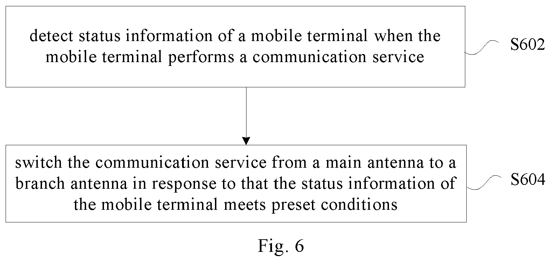

An embodiment of the present disclosure further provides a method for switching antennas. Fig. 6 is a flowchart illustrating a method for switching antennas according to an embodiment of the present disclosure.

As shown in Fig. 6, a method for switching antennas according to an embodiment of the present disclosure may include steps S602 to S604 as follows.

In step S602, status information of a mobile terminal is detected when the mobile terminal performs a communication service.

In step S604, the communication service is switched from a main antenna of the mobile terminal to a branch antenna of the mobile terminal in response to that the status information of the mobile terminal meets preset conditions.

Optionally, the subject which performs the above steps may be a terminal, but is not limited thereto.

Optionally, the step of switching the communication service from the main antenna of the mobile terminal to the branch antenna of the mobile terminal in response to that the status information of the mobile terminal meets the preset conditions may include: detecting the transmitting power and/or the receiving sensitivity of the mobile terminal when the mobile phone perform the communication service; and switching the communication service from the main antenna of the mobile terminal to the branch antenna of the mobile terminal in response to that the transmitting power is greater than a first preset value or the receiving sensitivity is less than a second preset value.

Optionally, the branch antenna includes a plurality of branch antennas corresponding to a plurality of frequency bands, respectively. The step of switching the communication service from the main antenna of the mobile terminal to the branch antenna of the mobile terminal may include: determining an operating frequency band in which the main antenna performs the communication service; and switching the communication service from the main antenna to a branch antenna corresponding to the operating frequency band.

According to another embodiment of the present disclosure, a processor for executing a computer program is provided. When the computer program is executed by the processor, the processor performs the methods for switching antennas according to the embodiments of the present disclosure.

According to another embodiment of the present disclosure, a storage medium is provided and has a computer program stored therein. When the computer program is executed by a processor, the processor performs the methods for switching antennas according to the embodiments of the present disclosure.

Through the above description of the embodiments, those skilled in the art may understand clearly that the methods according to the above embodiments may be implemented by software together with a necessary general-purpose hardware platform, and may also be implemented by hardware. Based on such understanding, the technical solutions of the present disclosure may be implemented in the form of a software product, and the software product is stored in a storage medium (such as a ROM/RAM, a magnetic disk, and an optical disc) and includes several instructions configured to enable a terminal device (which may be a mobile phone, a computer, a server, or a network device, etc.) to perform the methods according to the embodiments of the present disclosure.

Apparently, it should be understood by those skilled in the art that all the modules or steps of the present disclosure described above may be implemented by a general-purpose computing device, may be integrated in a single computing device or distributed on a network constituted of a plurality of computing devices. Optionally, the modules or steps may be implemented by program codes executable by a computing device, such that the modules or steps may be stored in a storage device and executed by a computing device. In some cases, the steps illustrated or described may be executed in an order different from that described above. The modules or steps may be separately made into integrated circuit modules, or some of the modules or steps may be made into a single integrated circuit module. Thus, the present disclosure is not limited to any specific combination of hardware and software.

The description above is merely of embodiments of the present disclosure, but is not intended to limit the present disclosure. Various modifications and changes may be made to the present disclosure by those skilled in the art. Any modification, equivalent replacement, and improvement made within the spirit and principle of the present disclosure should be included in the protection scope of the present disclosure.

## Claims

1. A mobile terminal, comprising:
a main antenna and at least one branch antenna, which are configured to transmit data between the mobile terminal and a mobile communication network; and
a processor configured to switch a communication service between the main antenna and the branch antenna.

2. The mobile terminal of claim 1, wherein
the main antenna is configured to transmit data in a plurality of frequency bands, and
the at least one branch antenna is configured to transmit data in a single frequency band.

3. The mobile terminal of claim 1, wherein the at least one branch antenna comprises a plurality of branch antennas corresponding to a plurality of frequency bands, respectively.

4. The mobile terminal of claim 1, wherein the processor is further configured to:
switch the communication service to the at least one branch antenna in response to that a transmitting power of the communication service is greater than a first preset value.

5. The mobile terminal of claim 1, wherein the processor is further configured to:
switch the communication service to the at least one branch antenna in response to that a receiving sensitivity of the communication service is less than a second preset value.

6. The mobile terminal of claim 3, wherein the processor is further configured to:
determine an operating frequency band in which the main antenna performs the communication service; and
switch the communication service from the main antenna to a branch antenna corresponding to the operating frequency band.

7. A method for switching antennas, comprising:
detecting status information of a mobile terminal when the mobile terminal performs a communication service; and
switching the communication service from a main antenna of the mobile terminal to a branch antenna of the mobile terminal in response to that the status information of the mobile terminal meets preset conditions.

8. The method for switching antennas of claim 7, wherein the step of detecting the status information of the mobile terminal when the mobile terminal performs the communication service comprises:
detecting a transmitting power of the mobile terminal when the mobile terminal performs the communication service, and
the step of switching the communication service from the main antenna of the mobile terminal to the branch antenna of the mobile terminal in response to that the status information of the mobile terminal meets the preset conditions comprises:
switching the communication service from the main antenna of the mobile terminal to the branch antenna of the mobile terminal in response to that the transmitting power is greater than a first preset value.

9. The method for switching antennas of claim 7, wherein the step of detecting the status information of the mobile terminal when the mobile terminal performs the communication service comprises:
detecting a receiving sensitivity of the mobile terminal when the mobile terminal performs the communication service, and
the step of switching the communication service from the main antenna of the mobile terminal to the branch antenna of the mobile terminal in response to that the status information of the mobile terminal meets the preset conditions comprises:
switching the communication service from the main antenna of the mobile terminal to the branch antenna of the mobile terminal in response to that the receiving sensitivity is less than a second preset value.

10. The method for switching antennas of claim 7, wherein the branch antenna comprises a plurality of branch antennas corresponding to a plurality of frequency bands, respectively, and the step of switching the communication service from the main antenna of the mobile terminal to the branch antenna of the mobile terminal comprises:
determining an operating frequency band in which the main antenna performs the communication service; and
switching the communication service from the main antenna to a branch antenna corresponding to the operating frequency band.

11. A storage medium having a computer program stored therein, wherein when the computer program is executed by a processor, the processor performs the method for switching antennas of any one of claims 7 to 10.

12. A processor for executing a computer program, wherein when the computer program is executed by the processor, the processor performs the method for switching antennas of any one of claims 7 to 10.
